# EUROPEAN PATENT APPLICATION

(11) **EP 1 076 298 A2**
(43) Date of publication of application: **14.02.2001**
(21) Application number: 00116269.2
(22) Date of filing: 09.08.2000
(51) Int. Cl.: G06F 17/30, G06F 17/60

(54) **Information transmitting apparatus, information saving apparatus, information receiving apparatus, method for using the same, and recording medium thereof**

(30) Priority: 09.08.1999 JP 22584999
(71) Applicant: MITSUBISHI MATERIALS CORPORATION, Chiyoda-ku, Tokyo 100-8117 (JP)
(72) Inventor: Ohkubo, Tasuma, Mobile Business Dev. Center, Minato-ku, Tokyo 105-0014 (JP); Nakane, Takunari, Mobile Business Dev. Center, Minato-ku, Tokyo 105-0014 (JP); Oki, Naoto, Mobile Business Dev. Center, Minato-ku, Tokyo 105-0014 (JP); Saburi, Tetsu, Mobile Business Dev. Center, Minato-ku, Tokyo 105-0014 (JP)
(74) Representative: HOFFMANN - EITLE

(57) **Abstract**

An information saving apparatus comprises an input/output unit connected to a network, an application unit for performing predetermined data processing, a notification administration unit for managing notifications exchanged between information-sharing users, and a storing unit for storing sending conditions relating to sending of notifications, data including notification administration information stipulating communication methods, and programs, wherein the information transmitting apparatus comprises a notification creating unit for creating notifications and the like notifying that shared information has been originated, and a data exchange unit, and wherein the information receiving apparatus comprises a reception confirmation notification creating unit for creating reception confirmation notifications notifying that shared information has been received, and a data exchange unit, thereby providing a handy information sharing apparatus wherein sharing members can obtain shared information at appropriate timing, confirmation can be made that the shared information has been transmitted to the receiver in a sure manner, and security is ensured.

## Description

### BACKGROUND OF THE INVENTION

### 1. Field of the Invention

The present invention relates to an apparatus for sharing information via a network such as the Internet.

### 2. Description of the Related Art

Conventionally, information has been shared via servers saving various types of information, such as WWW servers, directory servers, database servers, file servers, etc., set up on a network. These servers will hereafter be referred to as "information saving servers". In order to share information, it is necessary to have means for recognizing the fact that information has bee saved within an information saving server and the fact that data within the information saving server has been updated, and means for returning from a receiver a reception notification proving the fact that the receiver has received particular information from a information saving server.

Particularly, in order to cause recognition of newly saved items and updates made to an information saving server wherein access and control protocol is controlled by a Firewall or the like, means are generally used for transmitting notification mail using mail protocol having a general-use mail address determined uniquely for each member.

For example, the database update information mail notification system disclosed in Japanese Unexamined Patent Application Publication No. 10-63589 synchronizes the server and client by transferring mail of updated information to clients which have not accessed the server for a certain amount of time.

However, with a system which uses means of transferring notification mail using the above mail protocol, notification is made by mail each time an update is made, even in the event that the database is updated frequently. This means that the receiver relating to the notification must read a great number of mails, which has problems such as disrupting computer operations. Also, there are problems in that the transmission notification cannot be carried out in the event that the spool on the client-side mail system overflows and notification mail cannot be delivered. Further, there is the problem that current email systems transmit in plaintext, meaning that the information can be observed.

Particularly, with the system disclosed in the above Japanese Unexamined Patent Application Publication No. 10-63589, even in the event that accesses to the database are recorded as described above, information which is immediately needed and information which is not needed for the time being differs according to the members accessing the database and the information saved therein, so such an arrangement does not lend to configuring a very handy system.

### SUMMARY OF THE INVENTION

The present invention has been made in light of the above, and accordingly, it is an object thereof to provide a handy information sharing apparatus wherein sharing members can obtain shared information at appropriate timing, confirmation can be made that the shared information has been transmitted to the receiver in a sure manner, and security is ensured.

An information saving apparatus according to a first aspect of the present invention is an information saving apparatus for saving shared information, in an information sharing system wherein information is shared via a network, comprising:
an input/output unit connected to the network;
an application unit for performing predetermined data processing;
a notification administration unit for managing notifications exchanged between information-sharing users; and
a storing unit for storing sending conditions relating to sending of notifications, data including notification administration information stipulating communication methods, and programs;
   wherein in the event that the application unit receives shared information originating from a transmitting shared-information user via the network and input/output unit subjects the shared information to predetermined data processing and stores in the storing unit, and in the event of receiving notification accompanying origination of shared information from the transmitting shared-information user, a notification request for originating notification or information based on the notification to the receiving shared-information user is sent to the notification administration unit;
and wherein in the event that the notification administration unit receives the notification request, the notification administration unit makes reference to the notification administration information and originates the notification or information based on the notification to the receiving shared-information user, according to the sending conditions and communication method.

Incidentally, the term "transmitting shared-information user" as used here refers to a shared-information user who transmits shared information, and "receiving shared-information user" refers to a shared-information user who receives shared information transmitted from the transmitting shared-information user.

Also, an information saving apparatus according to a second aspect of the present invention is an information saving apparatus for saving shared information, in an information sharing system wherein information is shared via a network, comprising:
an input/output unit connected to the network;
an application unit for performing predetermined data processing;
a notification administration unit for managing notifications exchanged between information-sharing users; and
a storing unit for storing sending conditions relating to sending of notifications, data including notification administration information stipulating communication methods, and programs;
   wherein in the event that the application unit receives shared information originating from a transmitting shared-information user via the network and input/output unit subjects the shared information to predetermined data processing and stores in the storing unit, and in the event of a predetermined event set at the application unit occurring, a notification request for originating notification or information based on the notification to the receiving shared-information user is sent to the notification administration unit;
and wherein in the event that the notification administration unit receives the notification request, the notification administration unit makes reference to the notification administration information and originates the notification or information based on the notification to the receiving shared-information user, according to the sending conditions and communication method.

The application unit may comprise a plurality of application modules for performing data processing peculiar thereto, and the application modules may add information used by application modules in peculiar fashion to the notification or information based on the notification.

Also, the notification administration unit may be arranged so as to immediately originate notification or information based on the notification to the receiving shared-information user in the event that judgment is made from the sending conditions included in the notification administration information while making reference thereto that the notification or information based on the notification is to be sent immediately to the receiving shared-information user, and in the event of other conditions, to temporarily store the notification or information based on the notification in the storing unit and originated at the time determined by the sending conditions.

The notification administration unit may generate reception state administration information for managing the reception state of the shared information by the receiving shared-information user upon receiving a reception state administration request from the application modules, and manage the reception state. Note that the reception state administration information includes later-described reception confirmation notifications or information based on the reception confirmation notifications.

The application module may be arranged so as to send the reception confirmation notification or information based on the reception confirmation notification and an origination request to the notification administration unit upon receiving a reception confirmation notification from a receiving shared-information user indicating that shared information originated from a transmitting shared-information user has been received, and the notification administration unit so as to originate the reception confirmation notification or information based on the reception confirmation notification to the transmitting shared-information user upon receiving the origination request.

Note that in the operation of the application module, the expression "...to send the reception confirmation notification or information based on the reception confirmation notification and an origination request to the notification administration unit upon receiving a reception confirmation notification from a receiving shared-information user..." means that after receiving reception confirmation notification, there are cases wherein an origination request is immediately sent to the notification administration unit, and also cases wherein this is managed together as reception state administration information and the reception state administration information and origination request are sent to the notification administration unit after a certain period of time.

The application modules may add information used by application modules in peculiar fashion to the reception confirmation notification or information based on the reception confirmation notification.

An information transmitting apparatus according to a third aspect of the present invention is an information transmitting apparatus for originating shared information and transmitting notifications accompanying the originating of the shared information in an information sharing system wherein information is shared via a network, the information transmitting apparatus comprising:
a notification creating unit; and
a data exchange unit;
   wherein the notification creating unit obtains information to be contained in the notification accompanying the originating of the shared information and creates the notification based on the information;
and wherein the data exchange unit performs transmission of the shared information and the notifications created by the notification creating unit.

Here, the notification creating unit may further performs at least one of encrypting the notification accompanying originating of the shared information, and adding an electronic signature to the notification.

Also, the data exchange unit may be arranged so as to further transmit a reception state confirmation request for obtaining reception state information of the shared information by the receiving shared-information user, receive the reception state information and decrypts the reception state information in the event that the reception state information has been encrypted, and verify any electronic signature that has been attached thereto.

An information transmitting apparatus according to a fourth aspect of the present invention is an information receiving apparatus for receiving shared information and transmitting reception confirmation notifications that the shared information has been received in an information sharing system wherein information is shared via a network, comprising:
a reception confirmation notification creating unit; and
a data exchange unit for sending and receiving data;
   wherein the reception confirmation notification creating unit obtains information to be contained in the reception confirmation notification, and creates the reception confirmation notification based on the information.

Here, the data exchange unit may be arranged so as to receive shared information originated from the transmitting shared-information user, decrypt the shared information in the event that the shared information has been encrypted, verify any electronic signature that has been attached thereto, and further originate reception confirmation notifications created by the reception confirmation notification creating unit to the transmitting shared-information user.

Also, the reception confirmation notification creating unit may further perform at least one of encrypting the reception confirmation notification, and adding an electronic signature to the reception confirmation notification.

An information transmitting method according to a fifth aspect of the present invention is an information transmitting method for using an information transmitting program for realizing the information transmitting apparatus according the third aspect of the present invention by installing the program in a computer and executing the program thereby, comprising:
a procedure for obtaining the information transmitting program via a network;
a procedure for installing the information transmitting program in a computer and executing the program;
a procedure for transmitting shared information by the information transmitting program; and
a procedure for transmitting a notification to a receiver sharing the shared information that the shared information has been originated, either by the information transmitting program or by other predetermined transmitting means.

An information transmitting method according to a sixth aspect of the present invention is an information receiving method for using an information receiving program for realizing the information receiving apparatus according to the fourth aspect of the present invention by installing the program in a computer and executing the program thereby, comprising:
a procedure for obtaining the information receiving program via a network;
a procedure for installing the information receiving program in a computer and executing the program;
a procedure for obtaining shared information by the information receiving program; and
a procedure for transmitting the reception confirmation notification by the information receiving program.

Also, a computer-readable recording medium according to a seventh aspect of the present invention is a computer-readable recording medium upon which is recorded a program for realizing the information saving apparatus according to the first aspect of the present invention by installing the program in a computer and executing the program thereby, comprising:
a procedure for receiving shared information originated from a transmitting shared-information user via a network;
a procedure for subjecting the shared information to predetermined data processing;
a procedure for storing the shared information which has been subjected to the data processing;
a procedure for receiving a notification accompanying the originating of the shared information from the transmitting shared-information user;
a procedure for making reference to sending conditions relating to sending of notification or information based on the notification, and notification administration information stipulating communication methods; and
a procedure for originating the notification or information based on the notification to a receiving shared-information user, according to the sending conditions and communication method;
thereby readily realizing an information saving apparatus using a computer.

Also, a computer-readable recording medium according to an eighth aspect of the present invention is a computer-readable recording medium upon which is recorded a program for realizing the information saving apparatus according to the second aspect of the present invention by installing the program in a computer and executing the program thereby, comprising:
a procedure for receiving shared information originated from a transmitting shared-information user via a network;
a procedure for subjecting the shared information to predetermined data processing;
a procedure for storing the shared information which has been subjected to the data processing;
a procedure for monitoring occurrences of predetermined events, and making reference to the sending conditions relating to sending of notifications according to the event and notification administration information stipulating communication methods; and
a procedure for originating the notification or information based on the notification to a receiving shared-information user, according to the sending conditions and communication method;
thereby readily realizing an information saving apparatus using a computer.

Also, a computer-readable recording medium according to a ninth aspect of the present invention is a computer-readable recording medium upon which is recorded a program for realizing the information transmitting apparatus according to the third aspect of the present invention by installing the program in a computer and executing the program thereby, comprising:
a procedure for obtaining information to be contained in the notification accompanying the originating of the shared information;
a procedure for creating the notification, based on information to be contained in the notification accompanying the originating of the shared information;
a procedure for transmitting the shared information and the notification created by the notification creating unit;
a procedure for transmitting a reception state confirmation request for obtaining information of the reception state of shared information by a receiving shared-information user; and
a procedure for receiving the reception state information;
thereby readily realizing an information transmitting apparatus using a computer.

Further, a computer-readable recording medium according to a tenth aspect of the present invention is a computer-readable recording medium upon which is recorded a program for realizing the information receiving apparatus according to the fourth aspect of the present invention by installing the program in a computer and executing the program thereby, the method comprising:
a procedure for obtaining information to be contained in the reception confirmation notification notifying that the shared information has been received;
a procedure for creating the reception confirmation, notification, based on information to be contained in the reception confirmation notification;
a procedure for receiving the notification accompanying the originating of shared information originated from the transmitting shared-information user, and the shared information;
a procedure for decrypting the shared information and notification in the event that the shared information and notification has been encrypted, and verifying any electronic signature that has been attached thereto; and
a procedure for transmitting a reception confirmation notification to the transmitting shared-information user;
thereby readily realizing an information receiving apparatus using a computer.

### BRIEF DESCRIPTION OF THE DRAWINGS

Fig. 1 is a diagram illustrating the role of reception confirmation notification;
Fig. 2 is a block diagram illustrating the configuration of an information saving server which is an embodiment of the present invention;
Fig. 3 is an example of notification contents;
Fig. 4 is an example of a member information table;
Fig. 5 is an example of a member list information table;
Fig. 6 is an example of a notification administration table;
Fig. 7 is an example of saving a notification queue;
Fig. 8 is an example of a reception state table;
Fig. 9 is a diagram describing the operation of an information saving server at the time of performing notification distribution;
Fig. 10 is an operation flowchart of the notification administration unit;
Fig. 11 is an operation flowchart of the reception state administration module;
Fig. 12 is a block diagram illustrating the configuration of the information transmitting apparatus according to an embodiment of the present invention and a Web browser built in with the information transmitting apparatus; and
Fig. 13 is a block diagram illustrating the configuration of the information receiving apparatus according to an embodiment of the present invention and a Web browser built in with the information receiving apparatus

### DESCRIPTION OF THE PREFERRED EMBODIMENTS

The following is a description of embodiments of the present invention, with reference to the drawings.

Note that in the following description, the member which transmits shared information will be referred to as "transmitter", and the member which receives shared information will be referred to as "receiver".

First, the overview of an example of an information sharing system configured of the information transmitting device, information saving device, and information receiving device, according to the present invention, will be described.

The information transmitting apparatus and information saving apparatus and information receiving apparatus are connected to an network such as the Internet, and share information by exchanging information and predetermined notifications via the network. The information saving apparatus has means for providing multiple services and means for managing notifications. In the event that a transmitter is going to transmit information to a particular receiver, the transmitter uses the information transmitting apparatus to transmit the shared information to be provided to the receiver, and transmission notifications containing information for specifying the receiver, to the information saving apparatus. The information saving apparatus saves (stores) the shared information transmitted from the information transmitting apparatus. Then, a transmission notification is transmitted to the recipient (receiver) specified by the transmission notification sent from the information transmitting apparatus, according to the sending conditions and transmitting method specified separately. The receiver receives this transmission notification, accesses the information saving apparatus, and obtains the shared information. Then, the receiver transmits a reception confirmation notification to the information saving apparatus, for notifying that the shared information has been received in a sure manner. The information saving apparatus receives this reception confirmation notification, manages the reception state of the shared information, and sends data indicating the reception state to the transmitter, according to events such as confirmation requests or the like for the reception state of the shared information from the transmitter of the shared information.

Incidentally, in the event that the transmitter originates and shares predetermined information without specifying a receiver, the information saving apparatus saves this information, and originates this to predetermined members according to separately-set sending conditions and transmission methods. Also, there are cases wherein the transmission notification originated by the transmitter is directly sent to the receiver.

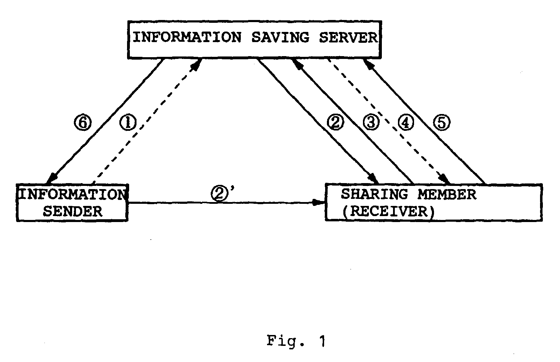

The role of "reception confirmation notification" in the above system will be described with reference to the example shown in Fig. 1. In Fig. 1, the transmitter uses the information transmitting apparatus, and the sharing member (receiver) uses the information receiving apparatus, so as to exchange data such as notifications and the like as described below.

Incidentally, the notification transmitted from the transmitter may be originated using general protocols and transmission methods, such as SMTP mail, pager, cellular phone, or the like. Accordingly, the receiver uses various receiving methods such as mailers and pages in addition to reception of notifications using the information receiving apparatus, according to the way in which the notification was transmitted.

First, the transmitter transmits the shared information to the information saving sever (①). Next, the information saving server makes notification that a change has been made at the information saving server relating to the shared information and sharing members (②, ②'). As indicated by ②' shown in Fig. 1, notification may be made directly from the transmitter to the sharing member. Upon receiving the notification, the sharing member transmits a shared information obtaining request to the information saving server (③). Upon receiving the shared information obtaining request, the information saving server distributes the corresponding shared information to the sharing member which originated the obtaining request (④). Upon receiving the shared information from the information saving sever, the sharing member transmits a reception confirmation notification to the information saving sever (⑤). In the event that there is a reception state confirmation request from the transmitter for example, according to conditions, the information saving server sends the reception confirmation notification sent from the sharing member or data indicating the reception state, to the transmitter (⑥).

Thus, by notifying reception confirmation, the transmitter can confirm that the shared information transmitted by the transmitter has been handed to the sharing members in a sure manner.

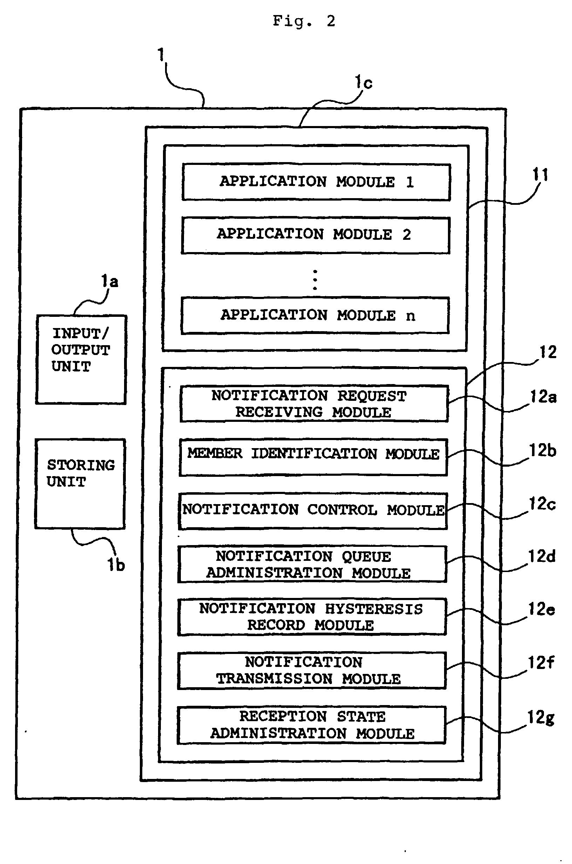

Next, the details of an information saving sever which is an embodiment of the information saving apparatus according to the present invention will be described. Fig. 2 is a block diagram illustrating the configuration of the information saving server.

The information saving server 1 is made up of an input/output unit 1a which is connected to a network such as the Internet and performs input and output of data, a storing unit 1b for storing data and various types of programs, and a processing unit 1c which performs processing of data stored in the storing unit 1b and data input and output via the input/output unit 1a.

The storing unit 1b stores data such as general databases or file systems, and programs.

The processing unit 1c is made up of an application unit 11 for performing various types of data processing and services such as accounting/bookkeeping applications and bulletin applications, and a notification administration unit 12.

The application unit 11 is made up of multiple application modules for performing administration of notification events and notification contents, in addition to data processing. Also, the application modules send notification requests containing notification contents and other information to the notification administration unit 12 according to notification events. Now, "notification" means a notification which is sent from or to the transmitter or receiver, such as transmission notifications sent from a transmitter or transmission notifications for an application module to notify that a change in shared information or the like has occurred or reception confirmation notifications sent from receivers, etc.

Events which generate notifications can be set from one application module to another (e.g., for processing bulletins or schedules, address books, document exchange, etc.). Accordingly, each application module has a notification request originating interface for sending notification requests to the notification administration unit 12 in the event that an event occurs regarding which notification contents should be transmitted. Appropriate notification timing can be judged by compiling this notification request originating interface appropriately for each application module, even in the event that widely varied types of information are updated.

Examples of notification events generated at an application module include notification specification by the transmitter or receiver, changing of saved information, virus detection, a notification event peculiar to an application, cases of transferring results and information at predetermined time intervals, predetermined time ranges, changing sharing members, public keys and IDs of members, updating information unique to members such as mail addresses and the like, and so forth.

Also, examples of information which application modules include in notifications include login information, access information, notification serial Nos., member IDs, passwords, contents of shared information, titles, comments, instruction procedure methods, billing information, data consisting of information relating to shared information and transfer which has been compressed by a hash function, digital signatures added by servers, recipient addresses, communication protocol types, recipient URLs (Uniform Resource Locator), URLs wherein formation is saved, reception time (date and time), the location where information is saved, addresses of application modules, reliability information such as virus inspection information, other information peculiar to application modules (application name and documents generated within the application), image or audio information by attachment files, facsimile, cellular phone, and so forth. Which information is to be included in the notification is defined depending on the application module.

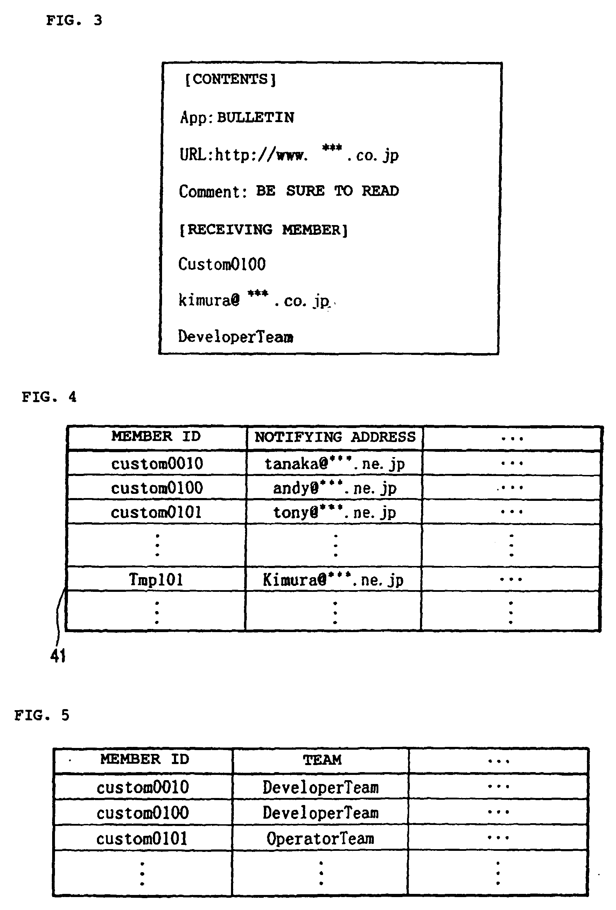

In the example of notification contents shown in Fig. 3, the type of application module (e.g., bulletin) set by the notification transmitter, the URL address where the application module exists (e.g., http://www.***.co.jp), comments (e.g., "BE SURE TO READ"), member ID of recipient sharing member (e.g., Custom0100), notifying Email address (e.g., kimura@***.co.jp), and team (e.g., Developer Team). There are cases wherein the notification contents contain the information set by the notification transmitter (the comments and recipient information in the example in Fig. 3) and information which the application module adds (type of application module and URL address in the example in Fig. 3) is included, and cases wherein only the information set by the notification transmitter is included.

Incidentally, in the event that the recipient information such as the member ID of the recipient sharing member, notifying Email address, team, etc., are not set by the notification transmitter, reference is made to the later-described notification administration table, member information table, member list information table, and so forth, and notification contents are generated based on default settings.

Also, the application modules send reception state administration requests to the later-described reception state administration module 12g, according to the settings. The reception state by the receiver of the shared information originated from the transmitter (i.e., whether reception has been completed or not) is thus managed by the reception state administration module 12g, by the reception state administration request. In this case, upon receiving reception confirmation notification from the receiver, the application module hands the reception confirmation notification to the reception state administration module 12g.

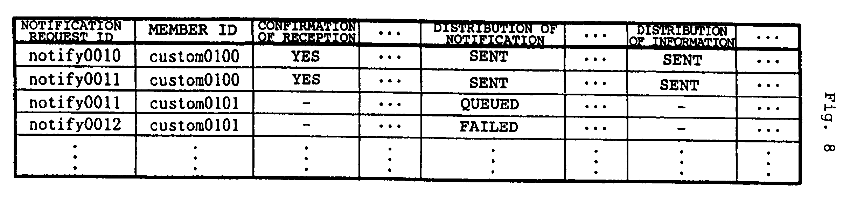

Also, the application module sends a reception state obtaining request for obtaining information relating to the reception state corresponding to the notification request ID to the reception state administration module 12g, and obtains reception state information regarding the shared information originated by the transmitter. Then, based on this information, and the member information table, member list information table, notification hysteresis, etc., a reception state table of which an example is shown in Fig. 8 is generated. The contents of this reception state table are sent to the transmitter, according to requests from the transmitter. Further, the application module sends a notification request for a reception confirmation notification to the reception state administration module 12g, according to the notification event. Due to this notification request, reception confirmation notification or information based on the reception confirmation notification is originated to the transmitter via the notification transmitting module 12f, by the reception state administration module 12g.

The above reception state table is a table for performing batch managing of the reception states of multiple receivers. The reception state table shown in the example in Fig. 8 is made up of records including "notification request ID", "member ID", "existence and contents of "reception confirmation" (including information contained in the reception confirmation notification, e.g., electronic signature, etc.), state of "notification distribution", state of "information distribution" managed by the application module, and so forth.

Existence or non-existence of "reception confirmation" indicates whether or not there has been reception notification from the notification receiving apparatus. The state of "notification distribution" indicates whether the notification transmission has been completed, is queued (awaiting distribution), or whether communication failure has occurred due to a communication fault, and so forth. The state of "information distribution" indicates whether shared information has been distributed (whether it has been downloaded to the recipient receiver).

Note that in the above description, the arrangement is such that the reception state administration module 12g receives the notification request for a reception confirmation notification from the application module and this reception confirmation notification is originated to the transmitter, but there are cases wherein the application modules transfers a reception confirmation notification to the transmitter, based on specifications by the shared information receiver (sharing member).

The notification administration unit 12 is made up of a later-described notification request reception module 12a, a member identifying module 12b, a notification control module 12c, a communication queue administration module 12d, a notification hysteresis recording module 12e, a notification transmission module 12f, and a reception state administration module 12g.

The later-described member IDs, application IDs, notification request IDs, notification administration table, etc. are managed in order to distribute notification requests from multiple application modules to multiple members. Also, the contents of notification or formats may be changed for each application module.

The notification request reception module 12a receives notification requests originated by application modules. The notification request contains information for identifying the member (notification transmitter) using the application module which originated the notification request (i.e., member ID and the like), the contents of the information to be notified, information of identifying the notification recipient member, and application IDs for identifying the multiple application modules. In the event that the notification request message is accepted in a normal manner, a notification request ID which identifies the notification request uniquely is generated. Note that a different application ID is appropriated for each application module, and that the application module originating the notification request is identified.

The member identifying module 12b identifies sharing members, and more specifically identifies members specified by various forms (e.g., member ID uniquely set to the system, Email address, telephone No., team of the sharing member, etc.), by inquiring member information databases containing member information (an example of a member information table is shown in Fig. 4), and similar resource databases set up on the network. In the event that a notification recipient which is unregistered has been specified, a new member ID may be generated dynamically (see reference numeral 41 in Fig. 4). Also, in the event that a notification request is received for a team containing multiple members, an arrangement may be used such as shown in Fig. 5 as an example wherein reference is made to the member list information table, and member IDs are obtained for each member belonging to the team as recipient of the notification, based on the specified team name (identifier).

The notification control module 12c manages the notification administration table (notification administration information) where rules for each member regarding notification are stored, and performs distribution of notifications according to the settings of the notification administration table for each member. Thus, notification distribution can be carried out as intended. As for members regarding which no notification administration table has been set in particular, default settings are applied. Note that the default settings may be set as appropriate for each team, and for each application.

Also, the notification control module 12c makes reference to the notification administration table upon receiving notification. Judgment is then made whether to actually transfer the notification, or whether to hand it to the notification queue administration module 12d, based on the sending conditions for the notification recipient member. In the event that the sending conditions are not satisfied, the notification is discarded. In the event that the settings are not for immediate sending, the notification is handed to the notification queue administration module 12d. In the event that the settings are that the notification is to be sent immediately, the notification information including the notification contents and notification method are handed to the notification transmitting module 12f.

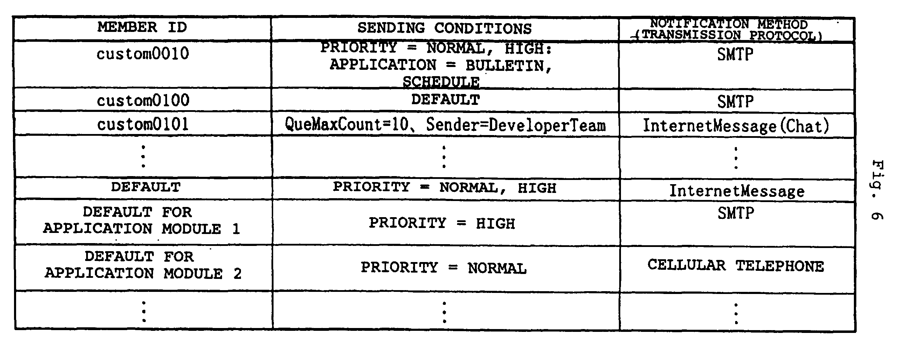

Fig. 6 shows an example of a notification administration table. In this example, the table is made up of records for setting member IDs for identifying members, sending conditions, and notification methods (communication protocols) used for notification.

The member ID is set to a code which is peculiar to the system and which uniquely identifies the member. The sending conditions are set regarding the judgement of whether to transmit the notification to the recipient or not. These conditions are separately defined and set. In the example shown in Fig. 6, notification priority, corresponding application module, upper limit of the notification queue (Que Max Count; set to 10 for the sending conditions for the member with the ID Custom 0101 as shown in Fig. 6), notification transmitter (sender), etc., as examples of conditions. The notification method and communication protocol used for notification transmission are set for the notification method. In the example shown in Fig. 6, transmission of notifications to the member with the member ID of "Custom0010" will be made by SMTP (Simple Mail Transfer Protocol) mail transmission.

In this way, the notification administration table is set with notification recipient address(s), type of communication protocol used, notification method such as date and time at which transmission is permissible, transmission permission priority for determining the transmission time of the notification based on the priority of the shared information, the transmission permission application for specifying that the notification is transmitted in the event of using which application, notification contents, and other sending conditions. Each member may change the settings of the notification administration table depending on each application module used. Also, information saved in external databases set up on the network may be used to substitute for information contained in the notification administration table. For example, in the event of transmitting mail notification to a receiver having a certificate issued by a certain certifying station, the notification control module 12c can access a directory server to obtain the information relating to the member (receiver) registered to this certifying station, and thus obtain the mail address of the receiver from the obtained information.

Also, default sending conditions, notification method, etc., are also appropriately set to the notification administration table. The default settings may be set according to each application module, or may be such that the sharing member can select which default settings to use. The sending conditions and notification method and the like can be changed by the member himself/herself. Further, the same member may set multiple sending conditions and notification methods. For example, the member may set different settings for each application module used (e.g., using different settings for "bulletin" and "settlement system", etc.).

Also, the notification administration table, member information table, member list information table, etc., may be stored in an external storing device rather than in the storing unit 1b, so as to perform obtaining, updating, and saving of the tables from the external storing device.

The notification queue administration module 12d stores the notification information in a notification queue, and manages the queued notifications for each member. The notification information stored in this notification queue is processed according to the notification sending time specifications. At the timing that the notification sending timing is satisfied, the notification information is handed to the notification transmitting module 12f. Even in the event that the notification is based on a notification request generated by different application modules or different notification events, processing is performed at the same timing that the conditions are satisfied. The functions of this notification queue administration module 12d allows multiple notifications to be batch-distributed as a single notification.

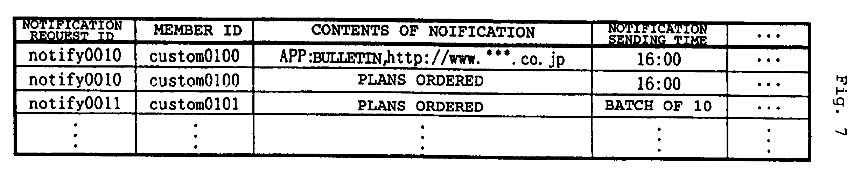

Fig. 7 illustrates an example of notification queue saving of the notification. The records made up of the notification request ID set by the notification control module 12c, member ID, notification contents, notification sending time, notification method, etc., are sequentially stored.

The notification hysteresis recording module 12e saves the contents of notification, notification hysteresis, etc., to the storing unit 1b or external storing device.

The notification transmitting module 12f generates notification information according to the notification method and communication protocol. Specifically, format settings and the like are performed according to SMTP mail transmission, (cellular) phone, facsimile, and other like notification methods and communication protocols used for actual transmission. URLs including application IDs may be transmitted with the notification information. The notification receiving apparatus can identify the application module used, from this application ID.

Also, handling the notification as a single file and transmitting as a mail attachment file facilitates ease of notification management on the side of the member. Also, this attachment file may be encrypted and transmitted. Further individual communication protocols may be used for transmitting the notification, but an arrangement wherein the notification information is formed into a single file and sent as a mail attachment file allows notification distribution to be carried out using general-use communication protocols, such as SMTP and HTTP (HyperText Transfer Protocol).

The reception state administration module 12g manages the reception state according to reception state administration requests from application modules. In the event of managing the reception state, the reception confirmation notification handed from the application module is saved for each application ID, member ID and notification request ID, thereby managing the reception state. For example, judgement can be made regarding whether or not reception of shared information by the receiver has been completed or not, depending on whether a saved reception confirmation notification exists or not. Also, with regard to the reception state obtaining request from the application module, information indicating whether reception of the shared information has been completed by the receiver or not is handed to the application module. Also, in the event that there has been a notification request for reception confirmation notification from an application module, the reception state administration module 12g originates the corresponding reception confirmation notification or information based on the reception confirmation notification, to the transmitter via the notification transmission module 12f.

Incidentally, the storing unit 1b is made up of a non-volatile recording apparatus, such as a hard disk, magneto-optical disk, etc.

Also, the processing unit 1c is configured of memory and a CPU (Central Processing Unit), with the functions thereof being realized by loading programs (not shown) executed for realizing the functions of the processing unit 1c to memory.

Also, connected to the information saving server 1 are peripheral equipment, i.e., an input device, display device, etc (neither shown). Here, "input device" means a keyboard, mouse, or the like. Also, " display device" means a CRT (Cathode Ray Tube), liquid crystal display device, etc. Also, with the present embodiment, the information saving server 1 is described as being a single apparatus, but this may be made up of multiple server machines.

Next, the operation of the information saving serving 1 according to the present embodiment thus configured will be described.

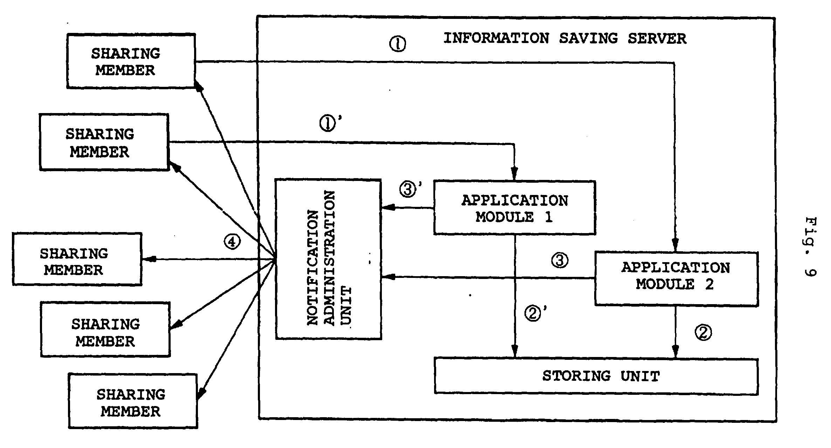

First, with reference to Fig. 9, description will be made regarding the operation of the information saving server 1 at the time of (transmission) notification distribution. Let us say that the sharing members exchange data with the information saving server 1 using notification transmitting apparatuses and notification receiving apparatuses.

The transmitter transmits the shared information and the transmission notification containing the information specifying the member for sharing this shared information (①, ①').

The application module performs predetermined processing on the received shared information and stores this in the storing unit 1b (②, ②'), analyzes the contents of the shared information, and sends the notification request to the notification administration unit 12 according to the contents thereof (③, ③').

The notification administration unit 12 analyses the notification request received from the application module, and also makes reference to the notification administration table, so as to notify the sharing member which the transmitter has specified that shared information has been uploaded to the information saving server 1 (④). Incidentally, this notification may be sent via the network being used by mail or the like, or may be sent using a pager, (cellular) phone, etc.

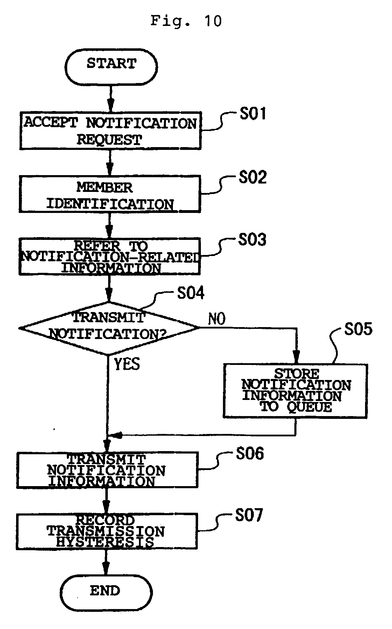

Next, making reference to the flowchart in Fig. 10 description will be made regarding the details of operation of the notification administration unit 12.

Upon originating of a notification request from an application module, the notification request reception module 12a accepts this notification request (step S01).

Then, the member identifying module 12b identifies the sharing member from the contents of the notification request (step S02).

Next, the notification control module 12c makes reference to the notification-related information such as member information, notification administration table, notification hysteresis, etc., for each sharing member identified in step S02 (step S03), in the storing unit 1b.

Further, the notification control module 12c judges whether or not to transmit the notification, based on the sending conditions in the notification administration table (step S04).

Then, in the event that judgment is made in step S04 to transmit the notification to the sharing member at a later timing, the notification control module 12c sends the notification information to the notification queue administration module 12d. Then, the notification queue administration module 12d accumulates this notification information in the notification queue of the storing unit 1b (step S05).

In the event that judgment is made in step S04 to transmit the notification to the sharing member immediately, the notification control module 12c sends the notification information to the notification transmitting module 12f. then the notification transmitting module 12f transmits the notification to the specified sharing member (step S06).

Then, the hysteresis (notification history) of the transmission of the notification to the sharing member by the notification transmission module 12f is stored in the storing unit 1b by the notification hysteresis recording module 12e (step S07).

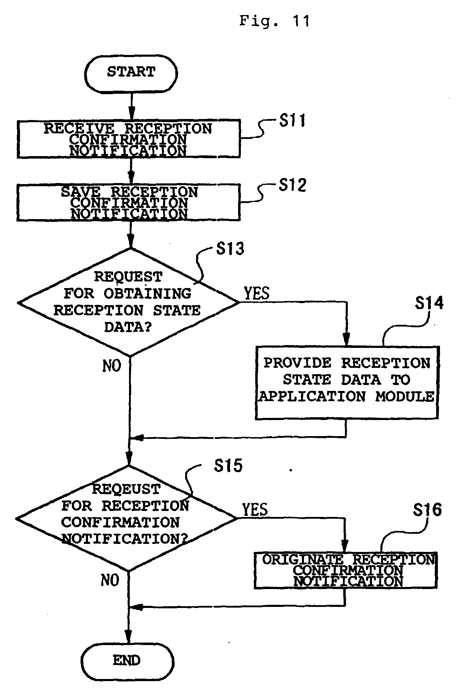

Next, description will be made regarding the operation of the reception state administration module 12g, with reference to the flowchart shown in Fig. 11. Here, let us say that the reception state administration module 12g has received a reception state administration request from an application module, and performs management of the reception state.

First, the reception state administration module 12g receives a reception confirmation notification from the receiver which has obtained the shared information, via the application module (step S11).

Next, this reception confirmation notification is saved in the storing unit 1b (step S12).

Next, judgement is made whether or not there is a data obtaining request for the reception state regarding a specified member or the group, from the application module (step S13).

In the event that judgment is made in step S14 that there has been a data obtaining request for the reception state of a specified member or the group, the corresponding data (e.g., data corresponding to the notification request ID in the event that a transmission notification has not been carried out) is handed to the application module (step S14).

Next, judgment is made regarding whether there is a notification request for reception confirmation notification from the application module (step S15).

In the event that judgment is made in step S15 that there is a notification request for reception confirmation notification, the reception confirmation notification or information based on this reception confirmation notification is originated to the information transmitter, via the notification transmitting module 12f (step S16).

The reception state data obtaining request by an application module as described above originates from an event such as a reception state confirmation request or the like from the notification transmitter to the application module. Also, as described above, the reception state data handed to the application module by the reception state administration module 12g is used for generating a reception state table in the application module.

Incidentally, the order of judgment in the above steps S13 and S15 is only an example, and the present invention is not restricted to this. Also, an arrangement may be made wherein only the judgement of one of step S13 or S15 is used.

Also, with the present embodiment the arrangement comprises a function for transmitting notifications from the transmitter to the receiver and for sending reception confirmation notifications from the receiver to the transmitter, but an arrangement may be made wherein the function for sending notifications from the transmitter to the receiver may be omitted, and used with only the function of sending reception confirmation notifications to the transmitter.

The above has been a detailed description of the information saving server 1.

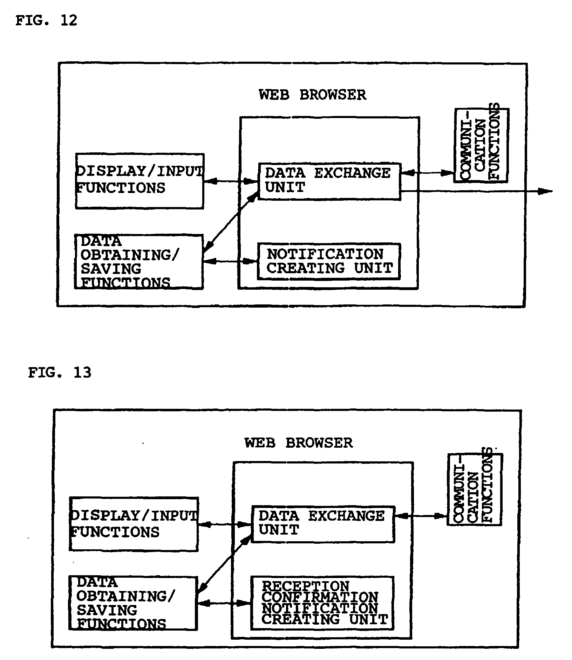

Next, an embodiment of the information transmitting apparatus according to the present invention will be described with reference to Fig. 12.

The information transmitting apparatus 2 according to the present embodiment has functions for transmitting information to the information saving apparatus used by the sharing members, and functions for sending notifications to the sharing members.

The information transmitting apparatus 2 is made up of a later-described data exchange unit 2a and a notification creating unit 2b. In the present embodiment, the information transmitting apparatus 2 will be described with the functions of the information transmitting apparatus 2 created as a Web browser Java applet (or as a script, macro program, plug-in, etc., executed by a client described on a Web page), this being built into the web browser, so as to use the functions of the Web browser executed on a personal computer or the like. There are two cases regarding the information transmitting apparatus 2 thus configured, one wherein the information transmitting apparatus 2 is installed in the terminal apparatus of the client beforehand, and the other wherein the Java applet or the like to realize the information transmitting apparatus 2 is downloaded from the information saving server 1 to perform exchange of information at the time of executing.

Making the information transmitting apparatus 2 into a downloadable configuration such as a Java applet or the like means that users using information exchange apparatuses using Web browsers or the like such as currently in common use can start the information transmitting apparatus 2 on their Web browser and transmit shared information and notifications.

Incidentally, the information transmitting apparatus 2 may be created as a dedicated Web browser, to be installed in a computer and executed thereby, or further may be realized as a dedicated apparatus of a form including the computer.

With the present embodiment, communication functions, input/output functions, and data obtaining and saving functions which the Web browser has, are used to perform transmitting of shared information and notifications.

The data exchange unit 2a transmits shared information, transmission notifications generated by the notification creating unit 2b, reception state confirmation requests, etc. Also, in the event that there is a hierarchical structure of files and folders, i.e., a directory, this is converted into a data format with hierarchical structure information added thereto. Thus, data of folders having a hierarchical structure and containing multiple files can be transmitted in batch fashion.

Also, in the event that multiple communication protocols are supported, the optimal communication protocol is selected (e.g., SMTP, HTTP, LDAP (Lightweight Directory Access Protocol), Web mail). The present embodiment uses the communication functions of the Web browser, so data can be converted into formats matching the communication protocol and sent, with the communication functions of the Web browser. However, in the event that processing such as encryption or the like has been performed, or in the event that multiple pieces of data are to be transferred, the data is converted into an optimal format for communication at the data exchange unit 2a, and then handed to the Web browser.

The notification creating unit 2b obtains information to be included in the transmission notification according to operations of the transmitter, and generates a transmission notification to notify the recipient receiver that shared information has been originated. The contents to be included in the transmission notification include time of transmission, information relating to the transmitter (ID, address), a part of the transmitted information (data name, compressed data), destination (address, URL address, destination application, etc.), comments by the transmitter (text, commands, etc.), encrypted notifications, notifications with digital signatures, and so forth (see Fig. 3). Also, a reception state confirmation request for confirming the reception state of the transmitted shared information (whether received by the sharing member (receiver) is generated, according to operations of the transmitter. Now, an arrangement may be made wherein, in the event of the application module creating a notification according to an event which occurred in the information saving server 1 and transmitting this to the receiver, or in the event that a transmission notification is not necessary, the notification creating unit 2b does not generate a transmission notification, and only generates a reception state confirmation request.

Also, the notification creating unit 2b performs encryption to the created transmission notification or applies an electronic signature thereto. This is due to the fact that the notification contents themselves notifying that confidential information has been saved in the information saving server 1 might be confidential information, in cases such as the transmitter transmitting encrypted confidential information to the information saving server 1. This case includes also instances wherein the notification contents (comments of the transmitter and information contents or a part thereof) are encrypted and transmitted, or an electronic signature is attached thereto and transmitted.

For example, in the event that comments or names relating to a contract are in the notification, unauthorized viewing thereof may lead to leakage of trading information, but on the other hand not including any such information may lead to the priority of the notification not being recognized and an information obtaining request to the information saving server 1 may not be originated. Also, there is the possibility that an individual with malicious intent may save a file with malicious intent (such as a virus) to the information saving server and pretend to be another user and send a notification, and in such a case the user receiving the notification may trust the sender pretending to be another user and download the file with malicious intent. In such cases, an arrangement is desired which has good secrecy, safety, and reliability, for the notifications themselves.

Accordingly, the notification creating unit 2b has encryption functions and digital signature functions for improving security relating to such notifications.

In the event of performing digital signatures to the notification contents, a shared-key encryption method (e.g., RC2 or DES (Data Encryption Standard) or the like), a public key encryption method (e.g., the RSA (Rivet-Shamir-Aldleman) method) or other like commonly-used encryption methods may be used, or multiple encryption methods may be used in conjunction (e.g., using both DES and RSA) to perform the encryption.

In the event that a digital signature is performed regarding the notification contents created at the notification creating unit 2b, the present embodiment performs the digital signature by a process for compressing information using hash functions (e.g., MD5, SHA-1, etc.) and creating a message digest, and a process of encryption, i.e., two processes. The RSA public key encryption method, DSA, etc, for example, are used for the algorithm used for encryption. The digital signature includes cases wherein a process for encryption with a secret key is performed regarding information not formed into a message digest, or combinations of a message digest and this information, in addition to the above processes. A digital signature is encrypted with a secret key (signature key) with regard to the information, regardless of compression or no compression.

Also, the notification transmitted from the information transmitting apparatus 2 is transmitted to the above information saving server 1, but this may be directly transmitted to the receiver of the shared information. For example, the communication functions of the Web browser may be used to access a SMTP server, and transfer the transmission notification via the SMTP server. The SMTP server address may be specified by the member, or reference may be made to address data stored in an external storing device. Also, the transmission notification may be directly sent using a pager, (cellular) phone, facsimile, etc., besides the above-described.

Next, the operation of the information transmission apparatus 2 according to the present embodiment thus configured will be described.

In a system for sharing information using an information saving server 1, the information transmission apparatus 2 for transmitting shared information and transmission notifications to the information saving server 1 is subjected to settings for transmission notification by the transmitter at the time of transmitting the information. The items set here are items which are managed in a manner peculiar to each application module, and are determined separately. The information transmitter which saves the shared information on the information saving serve 1 specifies the member to share the shared information with.

There are two methods for specifying, namely,
1) a method for specifying all members registered to a member list (or a team) by specifying a member list (a list registering a team and the team members) saved in the information saving server 1 or specifying a team defined by the member list information table,
2) a method for selecting and specifying a specific member at the time of transmitting.

As for the method of selecting and specifying a member with the method 2), an ID or mail address or a serial No. of an electronic certificate or the like issued from a reliable third party or the like, uniquely identifying the member, is used. In the event that the mail address of a specific member is not known, the mail address may be obtained from electronic certificates, or may be obtained by accessing a directory server or database on the network (using LDAP for example).

At the point that the settings peculiar to the application module to be used, the settings for the member to send the information to, etc., are completed by the transmitter, the notification creating unit 2b creates a transmission notification. Then, the data transmitting unit 2a transmits the transmission notification created by the notification creating unit 2b and the shared information to the information saving server 1. As described above, the transmission notification may be directly transmitted to the receiver of the shared information, rather than to the information saving server 1.

Also, upon the transmitter setting a reception state confirmation request of the information transmitted by the transmitter, the data exchange unit 2a transmits the reception state confirmation request to the information saving server 1 and obtains the reception state (whether or not the recipient receiver has completed reception). An arrangement may be used wherein reception of the reception state data from the information saving server 1 results in the reception state of the transmitted information being displayed, using the display functions of the Web browser. Thus, the transmitter can confirm whether the transmitted information has been received by the recipient receiver.

The above has been a detailed description of the information transmitting apparatus 2 which is an embodiment of the present invention.

Next, an embodiment of the information receiving apparatus according to the present invention will be described with reference to Fig. 13.

The information receiving apparatus 3 according to the present embodiment has functions for obtaining information from the information saving apparatus shared by the sharing members, and functions for sending reception confirmation notifications to the sharing members and the information saving apparatus.

The information reception apparatus 3 is made up of a later-described data exchange unit 3a and a reception confirmation notification creating unit 3b. In the present embodiment, the information receiving apparatus 3 will be described with the functions of the information receiving apparatus 3 created as a Web browser Java applet (or as a script, macro program, plug-in, etc., executed by a client described on a Web page), this being built into the Web browser used, so as to use the functions of the Web browser executed on a personal computer or the like. There are two cases regarding the information receiving apparatus 3 thus configured, one wherein the information receiving apparatus 3 is installed in the terminal apparatus of the client beforehand, and the other wherein the Java applet or the like to realize the information receiving apparatus 3 is downloaded from the information saving server 1 at the time of executing and assembled into the Web browser, to perform exchange of information.

Making the information receiving apparatus 3 into a downloadable configuration such as a Java applet or the like means that users using information exchange apparatuses using Web browsers or the like such as currently in common use can start the information receiving apparatus 3 on their Web browser and obtain shared information and transmit reception confirmation notifications.

Incidentally, the information receiving apparatus 3 may be created as a dedicated Web browser, to be installed in a computer and executed thereby, or further may be realized as a dedicated apparatus of a form including the computer.

With the present embodiment, communication functions, input/output functions, and data obtaining and saving functions which the Web browser has are used to perform reception of the shared information and transmission notifications, transmitting of reception confirmation notifications, etc.

In the event that the received transmitted notification or shared information has been encrypted, the data exchange unit 3a performs decrypting thereof, and in the event that an electronic signature has been applied thereto, confirms the electronic signature. Also, in the event that hierarchical structure information has been added to the received shared information, the files and folders are restored according to this information. Also, a reception confirmation notification created by the reception confirmation notification creating unit 3b or a shared information obtaining request for obtaining shared information is transmitted. Also, in the event that multiple communication protocols are supported, an optimal communication protocol is selected (e.g., SMTP, HTTP, LDAP, Web mail).

With the present embodiment, the communication functions of the Web browser are used, so data can be converted into formats matching the communication protocol and transmitted, with the communication functions of the Web browser. However, in cases where processing such as encryption has been performed, or wherein multiple pieces of data are transferred with the multiple pieces of data having been converted into a special communication format, the communication format is analyzed by the data exchange apparatus, divided into individual data units, and thus saved and displayed. Now, in the event that there is information which has been encrypted, that portion is decrypted and similarly saved and displayed.

Also, the data exchange unit 3a has built in the security method peculiar to the information sharing system and the application module of the information saving server 1.

In the event that there is shared information saved at the information saving server 1 in an encrypted state, a separate device for decrypting is necessary to obtain and view the shared information. Providing the data exchange unit 3a with the decrypting functions allows the encrypted information to be decrypted on the user terminal, without preparing special decryption software. Also, at the data exchange unit 3a, a message digest of the reception data at the point of reception is created sign hash functions, and the digital signature added to the data is compared and verified, thereby verifying the security of the data.

The decryption performed at the data exchange unit 3a uses the commonly-employed shared-key encryption method or public key encryption method, or both. Further, in the event that double encryption is performed by the above encryption and the encryption performed between the information saving sever 1 and the Web browser provided to the terminal of the receiver, the communication functions of the Web browser execute decryption corresponding to the encryption performed by the information saving server 1, following which decryption is performed again by the data exchange unit 3a, thereby allowing the original data to be viewed.

The reception confirmation notification creating unit 3b obtains information to be contained in the reception confirmation notification, for example, the reception time of the shared information, a part of the received shared information (data name, values for compressing data), information relating to the receiver (ID, address, etc.) comments of the receiver (positive or negative information regarding the received shared information, text, commands, etc.), and information regarding the receiving party ((URL) address, ID of transmitting application module, etc.). Then, a reception confirmation notification containing the obtained information will be generated.

The reception confirmation notification creating unit 3b further subjects the created reception confirmation notification to encryption and electronic signature. This is due to the fact that the notification contents themselves notifying reception confirmation might be confidential information, in cases such as the receiver has received encrypted confidential information from the information saving server 1. In this case, there is the need to for the reception confirmation notification contents (comments of the receiver and reception information contents or a part thereof) to be encrypted and transmitted, or have an electronic signature attached thereto, and be transmitted.

For example, in the event that comments or names relating to a contract are in the reception confirmation notification, unauthorized viewing thereof may lead to leakage of trading information, but on the other hand not including any such information may lead to the transmitter or the information saving apparatus 1 not being able to obtain information necessary for reception confirmation of the receivers. Also, there is the possibility that a user with malicious intent may pretend to be another user and send a reception confirmation notification, and in such a case judgment may be made that reception is completed, based on the reception confirmation notification relating to the user which the sender is pretending to be. In such cases, an arrangement is desired which has good secrecy, safety, and reliability, for the reception confirmation notifications themselves.

Accordingly, the reception confirmation notification creating unit 3b has encryption functions and digital signature functions for improving security relating to such notifications.

In the event of performing digital signatures to the reception confirmation notification contents, a shared-key encryption method (e.g., RC2 or DES or the like), a public key encryption method (e.g., the RSA method) or other like commonly-used encryption methods may be used, or multiple encryption methods may be used in conjunction (e.g., using both DES and RSA) to perform the encryption.

In the event that a digital signature is performed regarding the reception confirmation notification contents created at the reception confirmation notification creating unit 3b, the present embodiment performs the digital signature by a process for compressing information using hash functions (e.g., MD5, SHA-1, etc.) and creating a message digest, and a process of encryption, i.e., two processes. The RSA public key encryption method, DSA, etc, for example, are used for the algorithm used for encryption. The digital signature includes cases wherein a process for encryption with a secret key is performed regarding information not formed into a message digest, or combinations of a message digest and this information, in addition to the above processes. A digital signature is encrypted with a secret key (signature key) with regard to the information, regardless of compression or no compression.

Next, the operation of the information receiving apparatus 3 according to the present embodiment thus configured with be described.

In a system sharing information using the information saving server 1, the information transmitting apparatus 2 transmits an obtaining request (shared information obtaining request) to the information saving server 1, based on information contained in a received transmission notification. Note that a receiver may receive a transmission notification in an environment where this information receiving apparatus 3 does not exist. In this case, the receiver accesses the information saving server 1 from his/her own user terminal and receive verification, and then send a shared information obtaining request, which results in a program such as a Java applet or the like having the functions of the information receiving apparatus 3 being downloaded, and the information receiving apparatus 3 installed to the user terminal sends a shared information obtaining request again to the information saving server 1, thus obtaining the shared information from the information saving server 1.

Upon the data exchange unit 3a receiving the shared information from the information saving apparatus 1, the reception confirmation notification creating unit 3b obtains information to be contained in the reception confirmation notification (information required individually for the application module to be used, predetermined input information by the receiver, etc.), and a reception confirmation notification is generated based on this information. Then, the data exchange unit 3a transmits the reception confirmation notification created by the reception confirmation notification creating unit 3b to the information saving server 1 or the information transmitter.

The above has been a detailed description of the information receiving apparatus 3 which is an embodiment of the present invention.

Although the above description has the information transmitting apparatus 2 and the information receiving apparatus 3 as individual apparatuses, the information transmitting apparatus 2 and the information receiving apparatus 3 may be combined to configure a single apparatus.

Next, a process managing system for managing the manufacturing processes of multiple plants will be described as an example of an information sharing system using the above-described information saving server 1, information transmitting apparatus 2, and information receiving apparatus 3.

At plants A and B of a company M, the work contents of the manufacturing lines are all performed according to manuals. The network of plants A and B is connected to the process management system via the Internet. The process supervisor and the workers access the information saving server 1 using the Web browser provided to the user terminals, and exchange information relating to process management. The information saving server 1 which saves shared information is made up of manual saving applications configured on a WWW server, process management applications, a notification administration unit 12, and a database server which can be accessed from the WWW server. Conventionally, such process managing systems have been configured for each factory, but with company M, a system for centrally managing the processing managing system has been employed in order to reduce system operators and management costs.

The manual saving applications save and manage manuals created for each work process. The creating, updating, and discarding of these manuals is performed by process designers/managers, and the process designers/managers save newly created manuals or updated manuals to the WWW server.

These manuals are must be referred to and followed by the workers, so at the point of creating, updating, or discarding manuals, the ID of the manual saving application, information informing of the creating, updating, or discarding of a specific manual, and information relating to a list of line supervisors for plants A and B which will be the recipients, are necessary. In the event that such information is not at hand, the information can be obtained from plan A, plant B, or the head office, thereby identifying the members registered as line supervisors.

At this time, members who have been line supervisors for some time are already registered to the process management system, but members who have newly become line supervisors may not be registered to the process management system. In this case, automatic registration is made thereof as a new user. The notification control module 12c of the WWW server sends notifications according to the sending conditions of each member. For example, sending conditions are set according to the work forms on site, such as a line supervisor at the line being notified by a pager for the time being, a line supervisor at a computer terminal being notified by Email in real-time, and so forth.

Further, with regard to notification requests to be transferred immediately, the notification control module 12c hands the notification request to the notification transmission module 12f, and for other notifications, hands the notification to the notification queue administration module 12d. At the notification queue administration module 12d, the notification requests are managed along with other notification requests (including those issued by process managing applications), and at the point that the transmission time arrives, hands these to the notification transmission module 12f. The notification transmission module has communication functions which can use different lines such as telephone lines and LANs, and different communication protocols, and thereby transfers the notifications with the communication method set to the notification administration table. Also, notifications regarding which transmission has been completed are stored in a database by the notification hysteresis recording module 12e. The line supervisors upon receiving the notification view the notification contents, access the manual saving application on the WWW server, and obtain the newest distributed manual using FAX distribution or file transfer.

On the other hand, the process managing application is an application which manages the state of progression, and manages the state of daily reports, weekly reports, and monthly reports. One distribution per day is sufficient for information from the process managing application except for particularly important matters, so the arrangement is such that sending conditions with low priority are sent once a day with Email. Notification requests relating to reports issued by the process managing application are notification requests to line supervisors and floor supervisors, so the priority thereof is low, the format of the report is included as an attachment file, and further a URL address indicating the location to save the report (a URL is inserted according to the attached report, since the location to save the report differs depending on the date or the report) is included.

Upon receiving the notification request, the notification managing unit 12 transfers notifications once a day. However, in the event that the settings for a notification request are to transmit in real-time, the notification request is immediately transmitted to the notification transmission module 12f without going to the notification queue administration module 12d, even in the event that the priority of the notification request is low. The receiver opens the attachment file contained in the notification, fills in the predetermined contents for each item, and clicks on a URL within the notification, which downloads a login screen from the WWW server, so that in the event that login is successful, the report of the predetermined date can be uploaded to the URL to which it is to be saved.

Manuals downloaded from the manual saving applications must be saved in the newest state at least until the date of execution. At the time of downloading a manual, the manual saving application receives a reception confirmation notification including information of the individual who will be downloading, thereby verifying that the manual is being downloaded by the correct process supervisor. The manual saving application is provided with an information receiving apparatus created of a Java applet (here, a Java applet with information reception functions is referred to as an information receiving apparatus), which is first downloaded to the terminal in the event that a manual obtaining request is issued. Once the information receiving apparatus according to the Java applet is downloaded in assembled into the browser, the information receiving apparatus sends a manual obtaining request to the WWW server again. The WWW server recognizes that the obtaining request is from the information receiving apparatus, based on the information for identifying information receiving apparatuses included in the header of the manual obtaining request. Once confirmation is made that the obtaining request is valid, the manual is downloaded to the terminal.

Reception confirmation notifications regarding information originated from manual saving applications and process managing applications include at least application ID, notification request ID, and member ID. The process administrator originates a reception state confirmation request to the WWW server from the terminal to which is provided the information transmitting apparatus, and obtains the reception state information from the WWW server. Then, based on this information, verification is made regarding whether the manuals are being referred to and followed at all lines.

The above has been a description of a process managing system as an example of the information sharing system using the information saving server 1, information transmitting apparatus 2, and information receiving apparatus 3.

The present invention may use networks configured of LANs or using Dialup, besides the Internet.

Also, an arrangement may be made wherein programs for realizing the information transmitting apparatus or information saving apparatus or information receiving apparatus are recorded on a computer-readable recording medium, the programs recorded on the recording medium are read into a computer system and executed thereby, thus realizing the functions of the information transmitting apparatus or information saving apparatus or information receiving apparatus. That is to say, the program causes the computer to realize the functions of the notification creating unit and the functions of the data exchange unit of the information transmitting apparatus. Or, the program causes the computer to realize the functions of the application unit and the functions of the notification administration unit of the information saving apparatus. Or, the program causes the computer to realize the functions of the reception confirmation notification creating unit and the functions of the data exchange unit of the information receiving apparatus.

Also, in order to realize an information sharing environment in a mobile networking environment as well, an arrangement may be used wherein even in the event that a terminal must be used which does not have the functions of the information transmitting apparatus or the information receiving apparatus according to the invention which are necessary for information sharing, software which realizes the functions of the apparatuses is downloaded from a software saving apparatus or the information saving apparatus according to the present invention which are set up on the network and have stored therein software for realizing the functions of each of the apparatuses, to the terminal, thereby causing the computer system built into the terminal to read and execute the programs, thus realizing information sharing.

Incidentally, the term "computer system" as used here includes operating systems and hardware such as peripheral devices and the like.

Also, in the event of using a WWW system, the term "computer system" as used here includes homepage providing environments (or display environments) as well.

Also, the term "computer-readable recording medium" as used here means portable media such as floppy disks, magneto-optical disks, ROM, CD-ROMs, etc., and storage devices such as hard disks built into the computer system. Further, the term "computer-readable recording medium" as used here includes objects which temporarily dynamically hold programs such as the communication line in the event of transmitting programs via a network such as the Internet or telephone lines or the like (transporting media or transporting waves), and in such cases, includes objects which temporarily store programs such as volatile memory within the computer systems of the server and client.

Moreover, the above programs may realize a part of the above-described functions. Also, the above programs may be differential files (differential programs) realizing the above-described functions by combining with programs already recorded to the computer system.

Embodiments of the present invention have thus been described with reference to the drawings, but it should be understood that specific configurations of the present invention are by no means restricted to the embodiments, and that the present invention encompasses designs and the like which do not depart from the spirit and scope thereof.

Thus, as described above in detail, according to the present invention, notifications accompanying sending of shared information are originated to sharing members which share information originated by a transmitter, according to sending conditions, so the receivers can obtain the shared information at an appropriate timing, according to the priority of the shared information itself, the contents of the shared information necessary for the sharing members, and so forth. Thus, the sharing members can use an information sharing environment which is very handy.

Also, according to the present invention, reception confirmation notifications originated from the receiver of the shared information, or data based on the reception confirmation notifications, is originated to the transmitter of the shared information, so the transmitter can confirm that the shared information has been received by the receiver in a sure manner.

Also, according to the present invention, the notifications are subjected to encrypting and/or electronic signatures and thus originated, so that security according to the secrecy level of the notification contents and information being transferred can be secured.

## Claims

1. An information saving apparatus for saving shared information, in an information sharing system wherein information is shared via a network, said information saving apparatus comprising:
an input/output unit connected to the network;
an application unit for performing predetermined data processing;
a notification administration unit for managing notifications exchanged between information-sharing users; and
a storing unit for storing sending conditions relating to sending of notifications, data including notification administration information stipulating communication methods, and programs;
wherein in the event that said application unit receives shared information originating from a transmitting shared-information user via said network and input/output unit subjects said shared information to predetermined data processing and stores in said storing unit, and in the event of receiving notification accompanying origination of shared information from said transmitting shared-information user, a notification request for originating notification or information based on said notification to the receiving shared-information user is sent to said notification administration unit;
and wherein in the event that said notification administration unit receives said notification request, said notification administration unit makes reference to said notification administration information and originates said notification or information based on said notification to said receiving shared-information user, according to said sending conditions and communication method.

2. An information saving apparatus for saving shared information, in an information sharing system wherein information is shared via a network, said information saving apparatus comprising:
an input/output unit connected to the network;
an application unit for performing predetermined data processing;
a notification administration unit for managing notifications exchanged between information-sharing users; and
a storing unit for storing sending conditions relating to sending of notifications, data including notification administration information stipulating communication methods, and programs;
wherein in the event that said application unit receives shared information originating from a transmitting shared-information user via said network and input/output unit subjects said shared information to predetermined data processing and stores in said storing unit, and in the event of a predetermined event set at said application unit occurring, a notification request for originating notification or information based on said notification to the receiving shared-information user is sent to said notification administration unit;
and wherein in the event that said notification administration unit receives said notification request, said notification administration unit makes reference to said notification administration information and originates said notification or information based on said notification to said receiving shared-information user, according to said sending conditions and communication method.

3. An information saving apparatus according to either Claim 1 or 2, wherein said application unit comprises a plurality of application modules for performing data processing peculiar thereto.

4. An information saving apparatus according to Claim 3, wherein said application modules add information used by application modules in peculiar fashion to said notification or information based on said notification.

5. An information saving apparatus according to any of the Claims 1 through 4, wherein said notification administration unit immediately originates notification or information based on said notification to the receiving shared-information user in the event that judgment is made to from the sending conditions included in said notification administration information while making reference thereto that said notification or information based on said notification is to be sent immediately, and in the event of other conditions, said notification or information based on said notification is temporarily stored in the storing unit and originated at the time determined by said sending conditions.

6. An information saving apparatus according to any of the Claims 3 through 5, wherein, upon receiving a reception state administration request from said application modules, said notification administration unit generates reception state administration information for managing the reception state of the shared information by said receiving shared-information user, and manages said reception state.

7. An information saving apparatus according to any of the Claims 3 through 6, wherein, upon receiving a reception confirmation notification from a receiving shared-information user indicating that shared information originated from a transmitting shared-information user has been received, said application module sends said reception confirmation notification or information based on said reception confirmation notification and an origination request to said notification administration unit, and wherein, upon receiving said origination request, said notification administration unit originates said reception confirmation notification or information based on said reception confirmation notification to said transmitting shared-information user.

8. An information saving apparatus according to Claim 7, wherein said application modules add information used by application modules in peculiar fashion to said reception confirmation notification or information based on said reception confirmation notification.

9. An information transmitting apparatus for originating shared information and transmitting notifications accompanying the originating of said shared information in an information sharing system wherein information is shared via a network, said information transmitting apparatus comprising:
a notification creating unit; and
a data exchange unit;
wherein said notification creating unit obtains information to be contained in the notification accompanying the originating of said shared information and creates said notification based on said information;
and wherein said data exchange unit performs transmission of said shared information and said notifications created by said notification creating unit.

10. An information transmitting apparatus according to Claim 9, wherein said notification creating unit further performs at least one of the following:
encrypting the notification accompanying originating of said shared information; and
adding an electronic signature to said notification.

11. An information transmitting apparatus according to either Claim 9 or 10, wherein said data exchange unit further transmits a reception state confirmation request for obtaining reception state information of said shared information by the receiving shared-information user, and receives said reception state information and decrypts said reception state information in the event that said reception state information has been encrypted, and verifies any electronic signature that has been attached thereto.

12. An information receiving apparatus for receiving shared information and transmitting reception confirmation notifications that said shared information has been received in an information sharing system wherein information is shared via a network, said information receiving apparatus comprising:
a reception confirmation notification creating unit; and
a data exchange unit for sending and receiving data;
wherein said reception confirmation notification creating unit obtains information to be contained in said reception confirmation notification, and creates said reception confirmation notification based on said information.

13. An information receiving apparatus according to Claim 12, wherein said data exchange unit receives shared information originated from the transmitting shared-information user, decrypts said shared information in the event that said shared information has been encrypted, verifies any electronic signature that has been attached thereto, and further originates reception confirmation notifications created by said reception confirmation notification creating unit to said transmitting shared-information user.

14. An information transmitting apparatus according to either Claim 12 or 13, wherein said reception confirmation notification creating unit further performs at least one of the following:
encrypting said reception confirmation notification; and
adding an electronic signature to said reception confirmation notification.

15. An information transmitting method for using an information transmitting program for realizing the information transmitting apparatus according to any of the Claims 9 through 11 by installing said program in a computer and executing said program thereby, said method comprising:
a procedure for obtaining said information transmitting program via a network;
a procedure for installing said information transmitting program in a computer and executing said program;
a procedure for transmitting shared information by said information transmitting program; and
a procedure for transmitting a notification to a receiver sharing said shared information that said shared information has been originated, either by said information transmitting program or by other predetermined transmitting means.

16. An information receiving method for using an information receiving program for realizing the information receiving apparatus according to any of the Claims 12 through 14 by installing said program in a computer and executing said program thereby, said method comprising:
a procedure for obtaining said information receiving program via a network;
a procedure for installing said information receiving program in a computer and executing said program;
a procedure for obtaining shared information by said information receiving program; and
a procedure for transmitting said reception confirmation notification by said information receiving program.

17. A computer-readable recording medium upon which is recorded a program for realizing the information saving apparatus according to Claim 1 by installing said program in a computer and executing said program thereby, said method comprising:
a procedure for receiving shared information originated from a transmitting shared-information user via a network;
a procedure for subjecting said shared information to predetermined data processing;
a procedure for storing the shared information which has been subjected to said data processing;
a procedure for receiving a notification accompanying the originating of said shared information from said transmitting shared-information user;
a procedure for making reference to sending conditions relating to sending of notification or information based on said notification, and notification administration information stipulating communication methods; and
a procedure for originating said notification or information based on said notification to a receiving shared-information user, according to said sending conditions and communication method.

18. A computer-readable recording medium upon which is recorded a program for realizing the information saving apparatus according to Claim 2 by installing said program in a computer and executing said program thereby, said method comprising:
a procedure for receiving shared information originated from a transmitting shared-information user via a network;
a procedure for subjecting said shared information to predetermined data processing;
a procedure for storing the shared information which has been subjected to said data processing;
a procedure for monitoring occurrences of predetermined events, and making reference to said sending conditions relating to sending of notifications according to said event and notification administration information stipulating communication methods; and
a procedure for originating said notification or information based on said notification to a receiving shared-information user, according to said sending conditions and communication method.

19. A computer-readable recording medium upon which is recorded a program for realizing the information transmitting apparatus according to Claim 9 by installing said program in a computer and executing said program thereby, said method comprising:
a procedure for obtaining information to be contained in the notification accompanying the originating of said shared information;
a procedure for creating said notification, based on information to be contained in the notification accompanying the originating of said shared information;
a procedure for transmitting said shared information and said notification created by said notification creating unit;
a procedure for transmitting a reception state confirmation request for obtaining information of the reception state of shared information by a receiving shared-information user; and
a procedure for receiving said reception state information.

20. A computer-readable recording medium upon which is recorded a program for realizing the information receiving apparatus according to Claim 12 by installing said program in a computer and executing said program thereby, said method comprising:
a procedure for obtaining information to be contained in the reception confirmation notification notifying that said shared information has been received;
a procedure for creating said reception confirmation notification, based on information to be contained in said reception confirmation notification;
a procedure for receiving the notification accompanying the originating of shared information originated from the transmitting shared-information user, and said shared information;
a procedure for decrypting said shared information and notification in the event that said shared information and notification has been encrypted, and verifying any electronic signature that has been attached thereto; and
a procedure for transmitting a reception confirmation notification to the transmitting shared-information user.
